Europäisches Patentamt

European Patent Office

Office européen des brevets

(11) Numéro de publication : **0 416 986 B1**

(12) **FASCICULE DE BREVET EUROPEEN**

(45) Date de publication du fascicule du brevet :
23.02.94 Bulletin 94/08

(51) Int. Cl.$^5$ : **H04B 10/24, H04B 10/08**

(21) Numéro de dépôt : **90402410.6**

(22) Date de dépôt : **31.08.90**

(54) **Dispositif de bouclage pour système de transmission optique à l'alternat.**

(30) Priorité : **31.08.89 FR 8911444**

(43) Date de publication de la demande :
**13.03.91 Bulletin 91/11**

(45) Mention de la délivrance du brevet :
**23.02.94 Bulletin 94/08**

(84) Etats contractants désignés :
**DE GB IT NL SE**

(56) Documents cités :
**EP-A- 0 301 636**
**DE-A- 3 715 294**
**GB-A- 2 191 356**

(56) Documents cités :
**JOURNAL OF OPTICAL COMMUNICATIONS,
vol. 8, no. 2, juin 1987, pages 67-69, Berlin, DE;
R. PETROVIC et al.: "Bidirectional digital optical fiber system with transmitters synchronized with receivers"
PATENT ABSTRACTS OF JAPAN, vol. 8, no. 4
(E-220)[1441], 10 janvier 1984 & JP-A-58 171
139**

(73) Titulaire : **FRANCE TELECOM
6, Place d'Alleray
F-75015 Paris (FR)**

(72) Inventeur : **Abiven, Jacques Coat Maêl
Vieux Marché
F-22420 Plouaret (FR)**
Inventeur : **Rebours, Alain
chemin de Ker Ar Faout, 1e Rhu, Servel
F-22300 Lannion (FR)**

(74) Mandataire : **Cabinet Martinet & Lapoux
BP 405
F-78055 Saint Quentin en Yvelines Cédex (FR)**

Jouve, 18, rue Saint-Denis, 75001 PARIS

# Description

La présente invention relève de manière générale du domaine de la localisation des défauts dans des systèmes de transmission de signal. Plus particulièrement, l'invention concerne des dispositifs de bouclage pour la localisation des défauts dans des équipements de ligne inclus dans des systèmes de transmission optique à l'alternat.

Pour localiser les défauts de fonctionnement dans les systèmes de transmission, il est classique de mettre en place sélectivement des bouclages entre des entrées et des sorties d'équipements inclus dans ledit système. Dans des équipements terminaux de ligne classiques reliés à des supports de transmission de type métallique, différents composants sont disponibles et peuvent être utilisés tels que, par exemple, des micro-relais électro-magnétiques ou des éléments de commutation à l'état solide. Dans le cas d'un équipement de type optique, l'utilisation d'un commutateur optique simplifierait la conception d'un dispositif de bouclage. Néanmoins, les commutateurs optiques ne sont disponibles actuellement qu'au stade du laboratoire et ne sont pas commercialisés.

La présente invention vise à fournir des dispositifs de bouclage pour des équipements de ligne dans des systèmes de transmission optique à l'alternat, de conception relativement simple et de coût modéré et dans lesquels il n'est pas fait appel à des commutateurs optiques.

A cette fin, un dispositif de bouclage, selon l'invention, dans un équipement de ligne inclus dans un système de transmission optique à l'alternat comprend un coupleur de fibres optiques et des moyens pour annuler et pour retarder un signal d'écho tels que définis dans la revendication 1.

Des moyens de contrôle de gain d'un amplificateur à CAG, pour annuler ou amplifier le signal d'écho sont précisés à la revendication 2.

Des moyens inclus dans les moyens pour retarder, pour commander l'écriture et la lecture du signal d'écho dans une mémoire RAM sont définis dans la revendication 3.

L'invention sera mieux comprise à la lecture de la description suivante de plusieurs réalisations préférées du dispositif de bouclage selon l'invention en référence aux dessins annexés correspondants dans lesquels :

- la Fig. 1 montre schématiquement un système de transmission de signal de type bidirectionnel et à double support de transmission ;
- la Fig. 2 montre schématiquement un système de transmission optique de type bidirectionnel à l'alternat sur une unique fibre optique ;
- la Fig. 3 montre l'alternance de périodes de transmission et de réception dans un système de transmission à l'alternat ; et
- la Fig. 4 est un bloc-diagramme d'un terminal de ligne équipé d'un dispositif de bouclage selon l'invention.

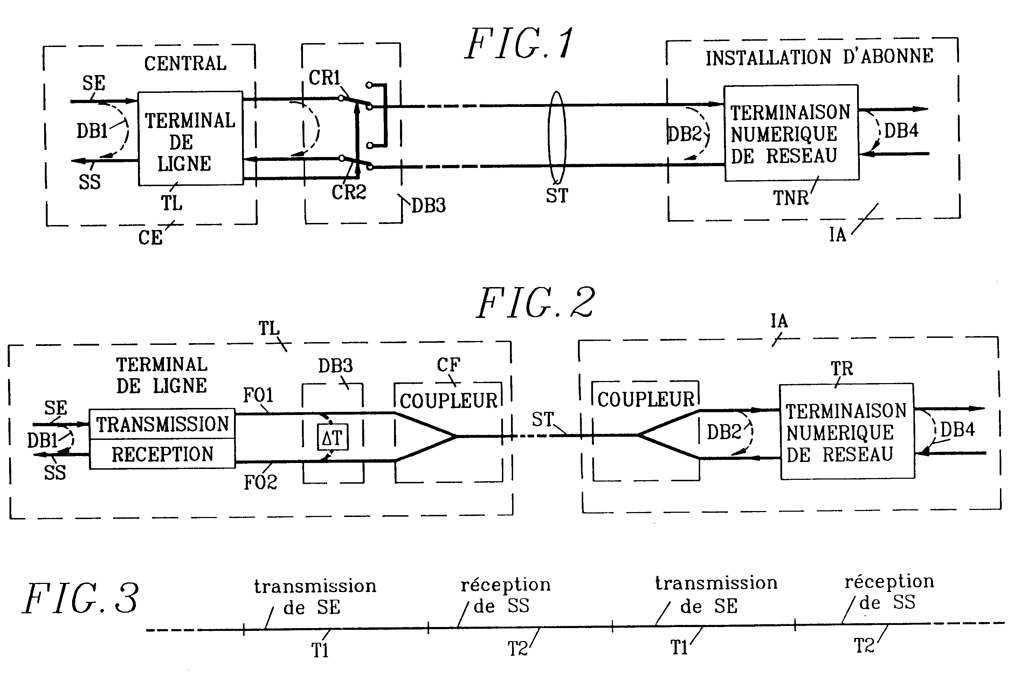

En référence à la Fig. 1, de manière classique la localisation des défauts de fonctionnement dans un système de transmission fait appel à des bouclages en entrée et sortie des équipements. Ainsi si l'on considère par exemple une transmission bidirectionnelle à travers un double support ST reliant un terminal de ligne TL d'un central téléphonique CE et une terminaison numérique de réseau TNR dans une installation d'abonné IA, quatre dispositifs de bouclage DB1, DB2 et DB3, DB4 sont généralement prévus respectivement en entrée et sortie du terminal de ligne TL et de la terminaison numérique de réseau TNR. Pour effectuer un test de bouclage à partir du central CE, un signal de test SE est transmis dans le sens TL→ TNR. Un premier bouclage est d'abord effectué au niveau du dispositif DB3, puis des second et troisième bouclages sont effectués respectivement au niveau des dispositifs DB2 et DB4. Le signal de test SE et un signal de retour SS fourni au terminal de ligne TL à travers chaque bouclage sont comparés. Un éventuel défaut est localisé dans le terminal de ligne TL ou dans le support de transmission ST ou dans la terminaison numérique de réseau TNR. Les bouclages sont télécommandés par exemple par des mots de codes déterminés qui sont transmis par le terminal de ligne TL et qui sont décodés dans le terminal de ligne TL et la terminaison numérique de réseau TNR. Dans le cas d'un support de transmission ST de type métallique, les dispositifs de bouclage DB1 à DB4 sont aisément réalisables. Comme montré à la Fig. 1 pour le dispositif de bouclage DB3, des contacts de relais, CR1 et CR2, sont utilisables.

Dans le cas d'un double support de transmission ST de type fibre optique, des commutateurs optiques pourraient être utilisés. Néanmoins, les commutateurs optiques sont encore actuellement au stade des études de laboratoire et ne sont pas commercialisés. Un bouclage sans l'utilisation de commutateur optique dans un système de transmission tel que montré à la Fig. 1 et dans lequel est utilisée une fibre optique par sens de transmission requiert des moyens relativement complexes et coûteux compte-tenu de la fonction à réaliser. Brièvement, des coupleurs optiques et des dispositifs électroniques adéquats seraient nécessaires.

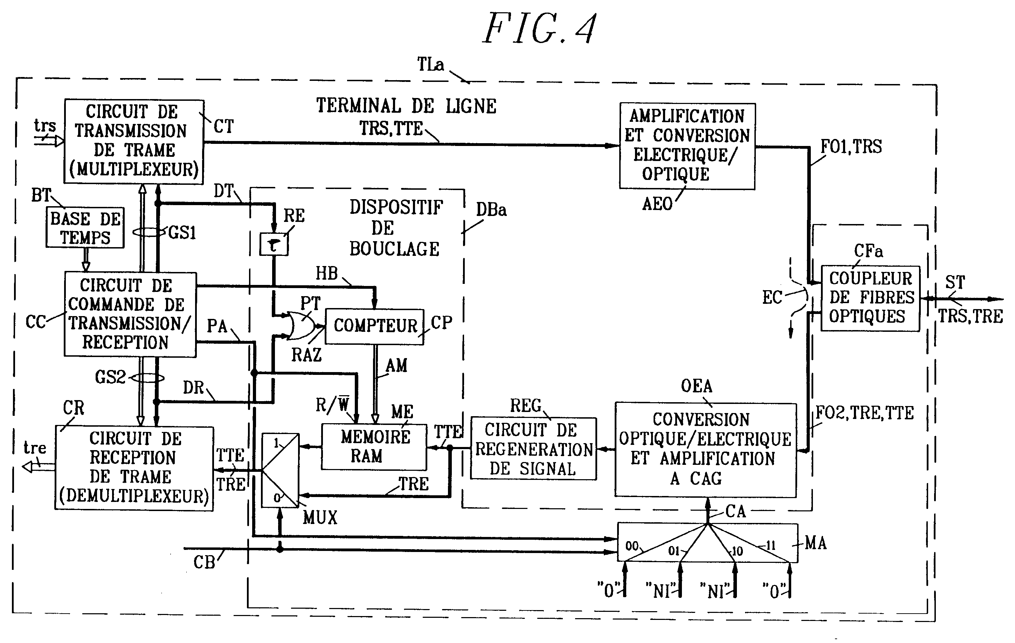

En référence à la Fig. 2, la réalisation d'un bouclage dans un système de transmission optique à l'alternat pose des problèmes supplémentaires. En effet, dans ce cas il est nécessaire de gérer très précisément les instants de transmission des signaux de manière à les faire coïncider avec des périodes de transmission correspondantes. Un retard $\Delta T$ de durée égale à la durée d'une période de transmission T1, T2, doit être introduit afin de faire coïncider la transmission du signal de retour SS avec une période de transmission T2 pendant laquelle le terminal de ligne TL est en phase de réception (Fig. 3).

Une solution qui s'impose est celle montrée à la Fig. 2 et consiste à placer le dispositif de couplage, DB3 par exemple, au niveau d'une liaison à deux fibres optiques, FO1 et FO2, entre le terminal de ligne TL et un coupleur de fibres optiques CF de type 2→1, le dispositif de bouclage étant constitué par un commutateur optique et des moyens de retard. Dans un système de transmission optique à l'alternat, les coupleurs de fibres optiques CF qui sont utilisés sont généralement des coupleurs à faible diaphonie de manière à minimiser l'écho local et à ne pas perturber les circuits de réception. Contrairement à cette disposition classique, un dispositif de bouclage selon l'invention requiert l'utilisation d'un coupleur de fibres optiques à forte diaphonie.

En référence à la Fig. 4, il est maintenant considéré, par exemple, un terminal de ligne TLa équipé d'un dispositif de bouclage DBa selon l'invention. Outre le dispositif de bouclage DBa, le terminal de ligne TLa comprend un circuit de transmission de trame CT et un circuit de réception de trame CR, une base de temps BT, un circuit de commande de transmission/réception CC, des moyens d'amplification et de conversion électrique/optique AEO, et des moyens de conversion optique/électrique et d'amplification à contrôle automatique de gain (CAG) OEA.

Le circuit de transmission de trame CT reçoit en entrée, en parallèle, différents bits de données et de gestion de trame trs. Les bits trs sont multiplexés afin de constituer des trames sortantes TRS qui sont délivrées en sortie sous forme sérialisée par le circuit de transmission de trame CT. Les signaux électriques correspondant aux trames TRS sont amplifiés et convertis en signaux optiques par les moyens d'amplification et de conversion AEO.

Une fibre optique de liaison FO1 relie les moyens AEO à un premier accès d'un coupleur de fibres optiques CFa. De manière classique, le coupleur CFa a pour première fonction de connecter le support optique de transmission ST à la voie de transmission et à la voie de réception du terminal de ligne TLa. Selon l'invention, une seconde fonction du coupleur CFa est de produire un signal optique d'écho EC d'amplitude suffisante. A cette fin, le coup leur CFa est constitué par un coupleur à forte diaphonie, si nécessaire spécialement développé pour le dispositif de bouclage selon l'invention DBa. Le signal d'écho EC est injecté dans une autre fibre optique de liaison FO2 reliant un second accès du coupleur CFa à une entrée des moyens de conversion optique/électrique et d'amplification à CAG, OEA. Le niveau du signal d'écho EC doit être important notamment par rapport à d'autres signaux optiques d'écho produits par des connexions et épissures le long du support de transmission ST.

Un amplificateur à CAG inclus dans les moyens OEA est commandé sélectivement par un signal CA en fonction des périodes T1 et T2 de l'alternat et de l'état de fonctionnement du terminal TLa. Le signal CA est délivré par un multiplexeur analogique MA prévu dans le dispositif de bouclage DBa.

En fonctionnement normal de transmission/réception de trames, le signal CA est à un niveau "0" pendant les périodes de transmission T1 et à un niveau "NI" pendant les périodes de réception T2. Le signal CA="0" désactive l'amplificateur OEA pendant les périodes T1 et le signal d'écho EC généré par les trames sortantes TRS est bloqué au niveau dudit amplificateur et n'est pas transmis vers le circuit de réception de trame CR. Le signal CA="NI" active l'amplificateur OEA pendant les périodes T2 et des trames entrantes TRE convoyées par le support de transmission ST sont transmises vers le circuit de réception de trame CR. Le circuit de réception de trame CR démultiplexe les trames entrantes TRE et les fournit sous la forme de bits en parallèle tre.

En fonctionnement de bouclage, le signal CA est à un niveau "NI" pendant les périodes de transmission T1 et à un niveau "0" pendant les périodes de réception T2. Des trames sortantes de test TRS=TTE sont transmises pendant les périodes T1 et le signal d'écho EC correspondant est transmis à travers l'amplificateur OEA vers le circuit de réception de trame CR. Pendant les périodes T2, l'amplificateur OEA est désactivé et tout signal en provenance éventuellement du support de transmission ST est bloqué au niveau dudit amplificateur et n'est pas transmis vers le circuit CR.

Outre le coupleur CFa qui de par sa seconde fonction fait partie intégrante du dispositif de bouclage selon l'invention DBa, le dispositif DBa comprend le multiplexeur analogique MA, une mémoire de type RAM, ME, un multiplexeur logique MUX, un compteur binaire CP, une porte logique de type OU, PT, et un circuit de retard RE.

Le multiplexeur analogique MA a pour fonction de produire le signal CA à partir de niveaux de tension continue "0" et "NI" appliqués respectivement à des première, quatrième et seconde, troisième entrées du multiplexeur MA. Deux entrées de commande d'aiguillage du multiplexeur MA reçoivent un signal de période d'alternat logique PA et un signal de commande de bouclage logique CB. Les combinaisons "00" et "10" des signaux PA et CB correspondent au fonctionnement normal en transmission/réception de trames et sélectionnent les niveaux "0" et "NI" pendant les périodes T1 et T2, respectivement. Les combinaisons "01" et "11" des signaux PA et CB correspondent au fonctionnement en bouclage et sélectionnent les niveaux "NI" et "0" pendant les périodes T1 et T2, respectivement. Les niveaux "0" et "NI" du signal CA correspondent à des niveaux de signal désirés en sortie des moyens OEA. Dans les moyens OEA, le signal CA est comparé au niveau de signal effectif en sortie des moyens OEA et un signal d'erreur agit sur une commande de gain de l'amplificateur à CAG. Ainsi le niveau de signal sortant des moyens OEA est maintenu constant en dépit d'une importante différence de niveaux entre les signaux EC et TRE.

La mémoire RAM, ME, a une entrée de données reliée à travers un circuit de régénération de signal REG à une sortie des moyens de conversion optique/électrique et d'amplification à CAG, OEA. Le circuit REG remet en forme les signaux de trame transmis par les moyens OEA et notamment les signaux relatifs à l'écho EC produit par les trames de test TTE. Les trames entrantes TRE sont transmises directement à une première entrée du multiplexeur MUX. Les trames de test TTE sont écrites dans la mémoire ME pendant les périodes de transmission T1 pour être retardées jusqu'aux périodes de réception T2 pendant lesquelles les trames de test sont lues dans la mémoire ME et transmises à travers le multiplexeur MUX vers le circuit de réception de trame CR. Les trames de test TTE lues dans la mémoire ME sont appliquées à une seconde entrée du multiplexeur MUX. Les première et seconde entrées du multiplexeur MUX sont sélectionnées respectivement par des états "0" et "1" du signal de commande de bouclage CB. La mémoire ME a typiquement une capacité de 1024 bits de manière à mémoriser des trames de test TTE de longueur égale à 1024 bits.

Les éléments CP, PT et RE ont pour fonction de commander de manière adéquate l'écriture et la lecture des trames de test TTE dans la mémoire ME. Typiquement, le compteur binaire CP est un compteur modulo 1024 et sa capacité de comptage correspond donc à la longueur des trames. Le même compteur CP est utilisé pour l'adressage en écriture et en lecture de la mémoire ME. Le compteur CP délivre en sortie des adresses AM qui sont appliquées à des entrées d'adressage correspondantes de la mémoire ME. Les adresses AM sélectionnent respectivement des cellules à un bit de la mémoire ME. Chaque cellule de la mémoire ME mémorise un bit de trame. Le compteur CP est incrémenté par une horloge de rythme de bit HB qui est fournie par le circuit de commande de transmission/réception CC.

Le circuit de commande de transmission/réception CC produit deux groupes de signaux d'horloge et de synchronisation GS1 et GS2 qui sont fournis respectivement au circuit de transmission de trame CT et au circuit de réception de trame CR. L'un, DT, des signaux du groupe GS1 est une impulsion à l'état "1" qui indique le début de la transmission d'une trame TRS, TTE par le circuit CT, pendant une période de transmission T1. L'un, DR, des signaux du groupe GS2 est une impulsion à l'état "1" qui indique le début de la réception d'une trame entrante TRE par le circuit CR, pendant une période de réception T2. L'impulsion DT est appliquée à une première entrée de la porte PT à travers le circuit de retard RE. L'impulsion DR est appliquée directement à une seconde entrée de la porte PT. Une sortie de la porte PT est connectée à une entrée de commande de remise à zéro RAZ du compteur CP.

Le terminal de ligne TLa étant bouclé, le début de la transmission d'une trame de test TTE pendant une période de transmission T1 coïncide avec l'impulsion DT à l'état "1". L'impulsion DT est retardée par le circuit RE d'une durée correspondant à un temps de transmission de signal entre la sortie du circuit de transmission de trame CT et l'entrée de données de la mémoire RAM, ME. L'impulsion DT appliquée à l'entrée RAZ du compteur CP, à travers la porte PT, commande le déblocage et l'initialisation à zéro du compteur CP en synchronisme avec l'arrivée du début de la trame TTE à l'entrée de données de la mémoire ME. Le signal PA est appliqué à une entrée de commande de lecture/écriture $R/\overline{W}$ de la mémoire ME. Pendant la période T1, le signal PA est à l'état "0" et la mémoire ME est sélectée en écriture. Le compteur CP est incrémenté cycliquement de l'adresse AM="0" à l'adresse AM="1023" au fur et à mesure de l'arrivée des bits de la trame de test TTE. Lorsque le compteur CP atteint la valeur maximale 1023, la totalité de la trame TTE est chargée dans la mémoire ME et le compteur CP se bloque.

L'impulsion DR="1" intervient au début de la période de réception T2 et signale que le circuit de réception de trame CR est prêt pour recevoir une trame. L'impulsion DR="1" débloque le compteur CP et l'initialise à zéro. Pendant la période T2, le signal PA est à l'état "1" et la mémoire ME est sélectéee en lecture. Le compteur CP délivre cycliquement les adresses de AM="0" à AM="1023", et les bits de la trame TTE sont transmis successivement vers le circuit de réception de trame CR à travers le multiplexeur MUX. Lorsque le compteur CP atteint la valeur maximale 1023, la trame de test TTE a été transmise en totalité vers le circuit CR et le compteur CP se bloque jusqu'à la réception d'une nouvelle trame TTE.

**Revendications**

1. Dispositif de bouclage dans un équipement de ligne (TLa, TNR) inclus dans un système optique de transmission à l'alternat, caractérisé en ce qu'il comprend

un coupleur de fibres optiques (CFa) reliant une voie de transmission (FO1) et une voie de réception (FO2) à un unique support optique de transmission (ST) et présentant une forte diaphonie entre des accès reliés auxdites voies pour produire un signal d'écho (EC) dans la voie de réception à partir d'un signal de test (TTE) transmis dans la voie de transmission pendant des périodes de transmission de signal (T1) de la transmission à l'alternat,

des moyens (MA, OEA, REG) pour annuler la transmission du signal d'écho (EC) dans la voie de réception lorsqu'un signal de données (TRS) est à transmettre dans le support optique et pour amplifier et régénérer ledit signal d'écho (EC) en un signal d'écho amplifié lorsque ledit signal de test est à transmettre, et

des moyens (ME, RE, PT, CP) pour retarder le signal d'écho amplifié (EC) et le transmettre vers des moyens de réception (CR) de l'équipement (TLa) pendant des périodes de réception de signal (T2) de la transmission à l'alternat.

2. Dispositif de bouclage conforme à la revendication 1, caractérisé en ce que les moyens pour annuler, amplifier et régénérer comprennent un amplificateur à contrôle automatique de gain (OEA) relié à la voie de réception (FO2), et des moyens de contrôle de gain (MA) pour désactiver l'amplificateur pendant les périodes de transmission de signal (T1) de la transmission à l'alternat lorsque le signal de données (TRS) est transmis et pour activer l'amplificateur pendant les périodes de transmission (T1) lorsque le signal de test (TTE) est transmis.

3. Dispositif de bouclage conforme à la revendication 1 ou 2, caractérisé en ce que les moyens pour retarder comprennent une mémoire (ME) de type RAM, et des moyens de commande d'écriture/lecture (RE, PT, CP) pour commander l'écriture et la lecture du signal d'écho amplifié (EC=TTE) dans la mémoire (ME) en synchronisme respectivement avec les périodes de transmission (T1) et les périodes de réception (T2) de la transmission à l'alternat.

**Patentansprüche**

1. Schleifenschlußanordnung in einer Leitungseinrichtung (TLa, TNR) eines optischen Zeitgetrenntlage-Übertragungssystems, dadurch gekennzeichnet, daß es folgende Komponenten aufweist:

einen Glasfaserkoppler (CFa), der eine Übertragungsleitung (FO1) und eine Empfangsleitung (FO2) mit einem einzigen optischen Übertragungsträger (ST) verbindet und ein starkes Nebensprechen zwischen den Anschlüssen, die mit den Leitungen verbunden sind, bildet, um ein Echosignal (EC) zu einem Testsignal (TTE) in der Empfangsleitung zu erzeugen, das in der Übertragungsleitung während der Übertragungsperioden des Signals (T1) der Zeitgetrenntlage-Übertragung übertragen wird,

Einrichtungen (MA, OEA; REG) zum Ausschalten der Übertragung des Echosignals (EC) in der Empfangsleitung, wenn ein Datensignal (TRS) in dem optischen Träger zu übertragen ist, und zum Verstärken und Regenerieren des Echosignals (EC) in ein verstärktes Echosignal, wenn das Testsignal zu übertragen ist, und

Einrichtungen (ME, RE, PT, CP) zur Verzögerung des verstärkten Echosignals (EC) und zu seiner Übertragung zu Empfangseinrichtungen (CR) der Einrichtung (TLa) während der Empfangsperioden des Signals (T2) der Zeitgetrenntlage-Übertragung.

2. Schleifenschlußanordnung nach Anspruch 1, dadurch gekennzeichnet, daß die Einrichtungen zum Ausschalten, Verstärken und Regenerieren einen leistungsgesteuerten Verstärker (OEA), der mit der Empfangsleitung verbunden ist (FO2), und leistungskontrollierte Einrichtungen (NA) zum Abschalten des Verstärkers während der Übertragungsperioden des Signals (T1) der Zeitgetrenntlage-Übertragung, wenn das Datensignal (TRS) übertragen wird, und zum Einschalten des Verstärkers während den Übertragungsperioden (T1), wenn das Testsignal (TTE) übertragen wird, aufweisen.

3. Schleifenschlußanordnung nach Anspruch 1 oder 2, dadurch gekennzeichnet, daß die Verzögerungseinrichtungen einen RAM-Speicher (ME) und schreib/lese-gesteuerte Einrichtungen (RE, PT, CP) zur Steuerung des Schreibens und des Lesens des verstärkten Echosignals (EC=TTE) in und aus dem Speicher (ME) synchron zu den Übertragungsperioden (T1) und den Empfangsperioden (T2) der Zeitgetrenntlage-Übertragung, aufweisen.

**Claims**

1. Loop-back device in a line equipment (TLa, TNR) included in an optical half-duplex transmission system, characterized in that it comprises

an optical fiber coupler (CFa) connecting a transmission channel (FO1) and a reception channel (FO2) to a single optical transmission medium (ST) and having a high crosstalk between ports connected to said channels for producing an echo (EC) signal into the reception channel from a test signal (TTE) transmitted in the transmission channel during transmission signal periods (T1) of the half-duplex transmission,

means (MA, OEA, REG) for cancelling the transmission of the echo signal (EC) in the reception channel when a data signal (TRS) is to be transmitted in the optical medium and for amplifying and regenerating said echo signal (EC) in an amplified echo signal when said test signal is to be transmitted, and

means (ME, RE, PT, CP) for delaying the amplified echo signal (EC) and transmitting it to receiving means (CR) in the equipment (TLa) during signal reception periods (T2) of the half-duplex transmission.

2. Loop-back device according to claim 1, characterized in that the cancelling, amplifying and regenerating means comprise an automatic gain control amplifier (OEA) connected to the reception channel (FO2), and gain control means (MA) for de-activating the amplifier during the signal transmission periods (T1) of the half-duplex transmission when the data signal (TRS) is transmitted and for activating the amplifier during the transmission periods (T1) when the test signal (TTE) is transmitted.

3. Loop-back device according to claims 1 or 2, characterized in that the delaying means comprise a RAM-type memory (ME), and write/read control means (RE, PT, CP) for controlling the writing and the reading of the amplified echo signal (EC = TTE) in the memory (ME) in synchronism respectively with the transmission periods (T1) and the reception periods (T2) of the half-duplex transmission.

FIG.1

FIG.2

FIG.3

# FIG.4

TERMINAL DE LIGNE
TRS,TTE

TLa

CIRCUIT DE TRANSMISSION DE TRAME (MULTIPLEXEUR) — CT

trs

BASE DE TEMPS — BT

CIRCUIT DE COMMANDE DE TRANSMISSION/ RECEPTION — CC

GS1

DT — RE

DISPOSITIF DE BOUCLAGE — DBa

HB

PT

RAZ

COMPTEUR — CP

PA

AM

GS2

DR

R/W̄

ME

CIRCUIT DE RECEPTION DE TRAME (DEMULTIPLEXEUR) — CR

tre

TTE

TRE

1

0

MUX

MEMOIRE RAM

TTE

TRE

REG

CIRCUIT DE REGENERATION DE SIGNAL

AMPLIFICATION ET CONVERSION ELECTRIQUE/ OPTIQUE — AEO

FO1,TRS

CFa

COUPLEUR DE FIBRES OPTIQUES

ST
TRS,TRE

EC

OEA

CONVERSION OPTIQUE/ELECTRIQUE ET AMPLIFICATION A CAG

FO2,TRE,TTE

CA

CB

00

01

10

11

MA

"0"  "NI"  "NI"  "0"

EP 0 416 986 B1

8